# FASCICULE DE BREVET EUROPEEN

(11) **EP 3 256 793 B1**
(45) Date de publication et mention de la délivrance du brevet: **08.07.2020**
(21) Numéro de dépôt: 16706550.7
(22) Date de dépôt: 09.02.2016
(51) Int. Cl.: F24H 3/04, F16B 3/04, H02B 1/052, H02G 3/10, B60H 1/22

(54) **DISPOSITIF DE CHAUFFAGE ELECTRIQUE ET ELEMENT DE VERROUILLAGE ASSOCIE**
ELEKTRISCHE HEIZVORRICHTUNG UND ZUGEHÖRIGE VERRIEGELUNGSVORRICHTUNG
ELECTRIC HEATING DEVICE AND ASSOCIATED LOCKING DEVICE

(30) Priorité: 10.02.2015 FR 1551045
(43) Date de publication de la demande: 20.12.2017
(73) Titulaire: Valeo Systemes Thermiques, 78320 Le Mesnil Saint Denis (FR)
(72) Inventeur: PIERRON, Frédéric, 78322 Le Mesnil Saint-Denis cédex (FR); KARAASLAN, Serif, 78322 Le Mesnil Saint-Denis cédex (FR); KERG, Philippe, 78322 Le Mesnil Saint-Denis cédex (FR)
(74) Mandataire: Tran, Chi-Hai
(86) Numéro de dépôt international: PCT/EP2016/052727
(87) Numéro de publication internationale: WO 2016/128400

(56) Documents cités:
- EP-A1- 1 515 588
- WO-A1-2005/049349

## Description

L'invention relève du domaine de la ventilation, du chauffage et/ou de la climatisation de véhicule automobile. Elle concerne les dispositifs de chauffage additionnel destinés à être montés dans une installation de ventilation, de chauffage et/ou de climatisation d'un véhicule automobile.

Plus particulièrement, l'invention concerne un dispositif de chauffage additionnel comportant des éléments chauffants à résistances électriques, par exemple des résistances à coefficient de température positif (CTP), qui permettent de produire rapidement de la chaleur dans les véhicules, notamment lorsque l'on souhaite chauffer rapidement l'habitacle.

Des dispositifs de chauffage de ce type comportent un corps de chauffe comprenant des éléments d'échange thermique pouvant diffuser de la chaleur, associés auxdits éléments chauffants. Ces dispositifs de chauffage additionnel comportent également des moyens de connexion qui permettent le raccordement électrique des résistances à un réseau électrique source embarqué sur le véhicule, pour l'alimentation électrique des éléments chauffants, et des moyens de connexion qui permettent la fixation mécanique du dispositif de chauffage additionnel à l'installation de ventilation, de chauffage et/ou de climatisation.

Dans les dispositifs de chauffage additionnel de ce type, il convient de s'assurer que le raccordement électrique soit correctement effectué pour la bonne alimentation électrique des éléments chauffants et donc la réalisation optimale de la fonction de chauffage du flux d'air passant dans le conduit. Or, ces opérations consistent en un montage par emboîtement et il peut arriver que les éléments chauffants ne soient pas assez enfoncés dans la zone de réception et que la connexion ne soit pas effectuée correctement.

Dans ce contexte, l'invention vise à proposer une alternative aux réalisations connues de dispositifs de chauffage additionnels, qui permette un positionnement sûr et fiable des différents composants d'un dispositif ayant trait à la connexion électrique des modules chauffants. Un élément de verrouillage de la position d'au moins un module chauffant selon le préambule de la revendication 1 est connu du document WO 2005/ 049349 A1.

L'invention a pour objet un élément de verrouillage de la position d'au moins un module chauffant dans un boîtier d'un dispositif de chauffage électrique, un dispositif de chauffage électrique comportant un tel élément de verrouillage et une installation de ventilation, chauffage et/ou climatisation comportant un tel dispositif de chauffage.

Selon l'invention, l'élément de verrouillage présente une forme de U comportant une base et des ailettes qui prolongent perpendiculairement les extrémités de ladite base. Chaque ailette présente une extrémité libre apte à coopérer avec une paroi du boîtier pour figer la position dudit élément de verrouillage par rapport au boîtier et au moins une ailette portant, sur une face interne orientée vers l'ailette opposée, un premier élément d'indexage de la position du au moins un module chauffant, ledit élément caractérisé en ce que l'extrémité libre de chaque ailette porte des doigts à déformation élastique.

Selon différentes caractéristiques de l'invention, prises seules ou en combinaison :
- l'élément de verrouillage du premier élément d'indexage est formé par au moins un rail qui s'étend, sur une face interne de l'ailette, sur toute la longueur de ladite ailette ; et/ou
- la face interne de la base comporte une rainure.

On comprend que ces différentes caractéristiques sont avantageuses en ce qu'elles se combinent efficacement avec des moyens coopérants sur le dispositif de chauffage pour figer la position de l'élément de verrouillage par rapport au boîtier d'une part et pour bloquer en position les modules chauffants.

Le dispositif de chauffage électrique selon l'invention est destiné à réchauffer un flux d'air traversant notamment une installation de ventilation, chauffage et/ou climatisation d'un véhicule automobile. Il comporte un boîtier et au moins un module chauffant par diffusion de chaleur sous l'effet d'un potentiel électrique, le module chauffant comportant au moins une électrode dont une extrémité libre dépasse en saillie du module chauffant pour être en prise avec des moyens de raccordement électriques du véhicule. Il comporte avantageusement un élément de verrouillage, tel qu'il vient d'être présenté, de la position des modules chauffants par rapport au boîtier, cet élément de verrouillage étant rapporté au boîtier en travers des modules chauffants pour prendre une position de verrouillage dans laquelle il est maintenu en position par fixation sur le boîtier et dans laquelle le premier élément d'indexage qu'il porte est apte à coopérer avec un deuxième élément d'indexage réalisé dans et/ou sur chacune des électrodes. On peut noter que l'ensemble des deuxièmes éléments d'indexage est complémentaire au premier élément d'indexage porté par ledit élément de verrouillage.

Selon différentes caractéristiques, prises seules ou en combinaison :
- la languette porte un terminal de raccordement serti, ledit deuxième élément d'indexage étant réalisé sur ledit terminal de raccordement ;
- le deuxième élément d'indexage est un élément femelle formé par une encoche apte à recevoir ledit premier élément d'indexage formé par un élément en saillie de l'élément de verrouillage ;
- l'élément de verrouillage prend une forme de U avec une base et des ailettes prolongeant perpendiculairement les extrémités de la base, chaque ailette présentant d'une part une extrémité libre apte à coopérer avec une paroi du boîtier pour figer ladite position de verrouillage et au moins une ailette porte, sur une face interne orientée vers l'ailette opposée, ledit premier élément d'indexage ;
- la face interne des ailettes porte un rail qui s'étend sur toute la longueur des ailettes ;
- l'extrémité libre de chaque ailette porte des doigts déformables à rappel élastique aptes à coopérer avec des lumières réalisées dans des parois du boîtier pour bloquer la position de l'élément de verrouillage par rapport au boîtier.

Selon une autre série de caractéristiques, on peut prévoir que :
- le boîtier présente une forme de parallélépipède avec des faces principales ajourées pour permettre la diffusion de chaleur des modules chauffants et deux parois latérales, l'élément de verrouillage étant agencé pour que dans sa position de verrouillage, la base soit plaquée contre une première paroi latérale tandis que les extrémités des ailettes sont en prise dans des logements respectifs formés dans la paroi latérale opposée ;
- la première paroi latérale peut comporter une nervure longitudinale qui s'étend sur une face externe de la première paroi longitudinale, au moins sur une longueur sensiblement égale à la hauteur de l'élément de verrouillage, et qui est étant apte à coopérer avec une rainure réalisée dans la face interne de la base de l'élément de verrouillage ;
- une barrette peut être disposée contre la deuxième paroi latérale du boîtier opposée à la première paroi latérale du boîtier contre laquelle est plaquée la base de l'élément de verrouillage dans ladite position de verrouillage ;
- le boîtier comporte une paroi intermédiaire parallèle aux parois latérales et disposée entre celles-ci, ladite paroi intermédiaire présentant un dégagement apte à laisser passage à l'élément de verrouillage et à former une butée d'alignement axial dudit élément de verrouillage.

Selon un mode de réalisation particulier de l'invention, le boîtier comporte une interface de connexion disposée à une extrémité du compartiment de chauffe, cette interface de connexion pouvant par exemple s'étendre en travers des modules chauffants à une extrémité des parois latérales définissant les logements de ces modules chauffants, et qui présente au moins une ouverture traversante, cette ouverture traversant préférentiellement l'interface, et apte à laisser passage à une languette en saillie d'une électrode d'un module chauffant, ou à un terminal électrique monté sur la languette, pour le raccordement des modules chauffants auxdits moyens de raccordement électriques du véhicule. L'élément de verrouillage peut alors s'étendre dans la position de verrouillage transversalement entre les modules chauffants et l'interface de connexion.

Selon des caractéristiques propres à un ou un autre mode de réalisation, on pourra prévoir que :
- le deuxième élément d'indexage est un élément femelle formé par une ouverture réalisée dans l'épaisseur apte à être traversé par l'élément de verrouillage ; ou bien
- le deuxième élément d'indexage est un élément mâle apte à coopérer avec un premier élément d'indexage femelle porté par l'élément de verrouillage.

Le boîtier du dispositif de chauffage électrique d'un flux d'air selon l'invention peut comporter en outre une ou plusieurs des caractéristiques suivantes, seules ou en combinaison :
- le au moins un module chauffant s'étend, lorsqu'il est disposé dans le compartiment de chauffe, selon une direction d'extension générale entre une première extrémité et une deuxième extrémité ;
- la direction d'extension générale dudit au moins un module chauffant est sensiblement longitudinale ;
- le compartiment de chauffe s'étend selon une direction d'extension générale entre une première et une deuxième extrémité ;
- la direction d'extension générale du compartiment de chauffe est sensiblement longitudinale ;
- au moins une partie d'au moins un côté du compartiment de chauffe est évidée ou ajourée ;
- le au moins un module chauffant comporte au moins un élément apte à produire de la chaleur et au moins un élément associé apte à échanger de la chaleur avec le flux d'air traversant le bloc de chauffe ;
- le au moins un module chauffant est apte à produire et à diffuser de la chaleur sous l'effet d'un potentiel électrique ;
- ledit au moins un élément apte à produire de la chaleur est un élément résistif ;
- ledit au moins un élément apte à produire de la chaleur est un élément résistif de type à coefficient de température positif (CTP) ;
- ledit au moins un élément apte à produire de la chaleur est un élément résistif de type à coefficient de température positif (CTP) disposé dans ou sur un support tel qu'un barreau ;
- ledit au moins un élément apte à produire de la chaleur est un élément résistif disposé entre deux électrodes ;
- ledit au moins un élément associé qui est apte à échanger de la chaleur est un élément radiant ou un dissipateur thermique ;
- ledit au moins un élément associé apte à échanger de la chaleur est au moins une ailette traversée par au moins un élément apte à produire de la chaleur, ou encore des intercalaires tels que des rubans métalliques plissés ou ondulés disposés entre des éléments aptes à produire de la chaleur ;
- ledit au moins un élément apte à produire de la chaleur est disposé entre deux éléments aptes à échanger de la chaleur ;
- le au moins un module chauffant comporte un élément apte à produire de la chaleur disposé entre deux éléments aptes à échanger de la chaleur ;
- le au moins un module chauffant comporte deux éléments aptes à produire de la chaleur et trois éléments aptes à échanger de la chaleur, un élément apte à échanger de la chaleur étant disposé entre deux éléments aptes à produire de la chaleur, chacun de ces éléments aptes à produire de la chaleur étant disposé entre l'élément central apte à échanger de la chaleur et un élément externe apte à échanger de la chaleur ;
- la première interface de connexion s'étend transversalement au compartiment de chauffe.

D'autres caractéristiques et avantages de la présente invention apparaitront plus clairement à l'aide de la description et des dessins parmi lesquels :
- la figure 1 est une vue partielle d'un dispositif de chauffage additionnel apte à être logé en travers d'un conduit de circulation d'air d'une installation de ventilation, chauffage et/ou climatisation, dans laquelle on a représenté en perspective, de trois quart arrière, une partie proximale d'un compartiment de chauffe du dispositif, une interface de connexion et des terminaux électriques aptes à être emmanchés sur des électrodes de modules chauffants ici non représentés, ainsi qu'une clé de verrouillage dans une position déverrouillée;
- la figure 2 est une vue similaire à celle de la figure 1, avec la clé de verrouillage dans une position verrouillée ;
- la figure 3 est une vue de côté du dispositif de chauffage sans clé de verrouillage associé ;
- la figure 4 est une vue en perspective de la clé de verrouillage illustrée sur les figures 1 et 2 ;
- et la figure 5 est une vue de détail de l'extrémité libre de la clé de verrouillage des figures précédentes, pour illustrer la coopération de celle-ci avec les terminaux électriques.

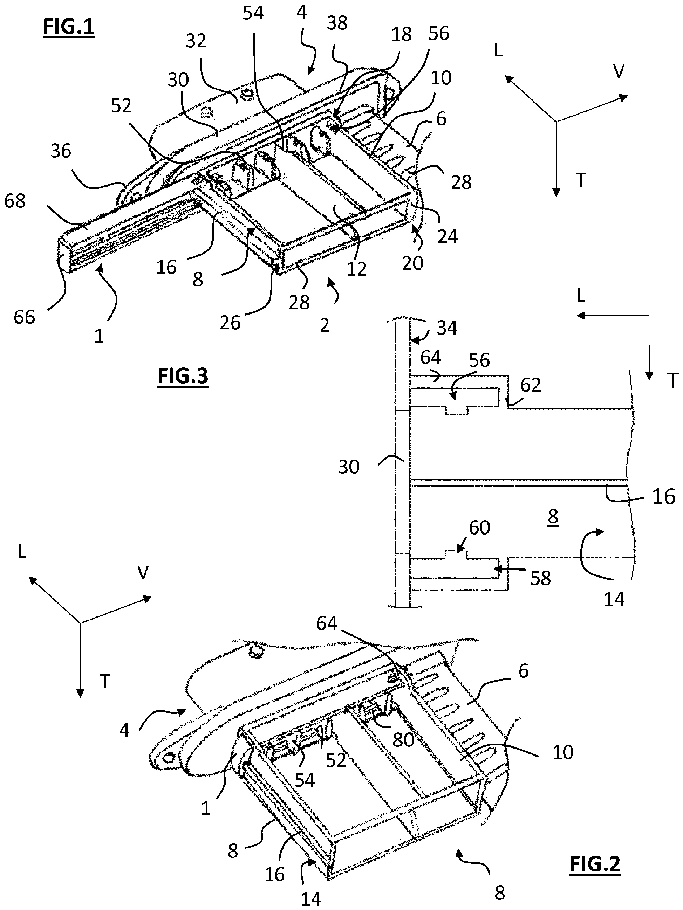

Dans la description qui va suivre, on se réfèrera à une orientation fonction des axes Longitudinaux, Verticaux et Transversaux tels qu'ils sont définis arbitrairement par le trièdre L,V,T représenté sur les figures 1 et 2. Le choix des appellations de ces axes n'est pas limitatif de l'orientation que peut prendre le dispositif dans son application à un véhicule automobile, et l'utilisation de termes tels que « supérieur » et « inférieur » est choisie en fonction de l'orientation dans l'illustration accompagnant cette description sans qu'elle soit non plus limitative.

Un dispositif de chauffage électrique est apte à être logé en travers d'un conduit de circulation d'air d'une installation de ventilation, chauffage et/ou climatisation, de manière à transformer l'énergie électrique prélevée sur le véhicule en énergie thermique restituée dans l'air traversant ladite installation de ventilation, chauffage et/ou climatisation. L'installation de chauffage-ventilation et climatisation n'est pas ici représentée, mais on comprendra qu'un conduit principal de cette installation comporte de façon classique une ouverture réalisée dans la paroi pour l'insertion du dispositif de chauffage additionnel.

On se réfère tout d'abord aux figures 1 et 2 pour décrire un tel dispositif de chauffage avant son montage dans le conduit de l'installation de ventilation, chauffage et/ou climatisation, avec un élément de verrouillage 1 associé dans une position passive (figure 1) et dans une position active verrouillée (figure 2).

Le dispositif de chauffage comporte un boîtier et des modules chauffants (non représentés sur les figures) aptes à transformer un courant électrique en énergie thermique. On pourra se référer au document brevet FR2895204 pour la description plus détaillée des modules chauffants et un exemple de réalisation avec la présence de dissipateurs thermiques enserrés par des électrodes de part et d'autre d'une ou plusieurs pierres à coefficient de température positif (effet CTP).

Le boîtier comporte au moins un compartiment de chauffe 2 de réception des modules chauffants et une interface de connexion 4 disposée à une extrémité proximale du compartiment de chauffe 2 pour le raccordement du dispositif à un réseau électrique du véhicule et l'alimentation des modules chauffants. Le boîtier peut comporter en outre une barrette 6 rainurée qui s'étend le long du compartiment de chauffe 2 depuis l'interface de connexion 4.

Le compartiment de chauffe 2 présente une forme de parallélépipède rectangle dont les deux faces principales sont ajourées pour permettre la diffusion dans le conduit de la chaleur dégagée par les modules chauffants dont une extrémité est logée à l'intérieur du compartiment de chauffe 2. Avantageusement, le compartiment de chauffe 2 est venu de matière avec l'interface de connexion 4, même s'il est envisageable sans sortir du contexte de l'invention que ce compartiment de chauffe 2 soit réalisé distinctement de l'interface correspondante 4 et rapportée et fixée, par soudage notamment, sur l'interface 4.

Le compartiment de chauffe 2 comporte trois parois qui s'étendent longitudinalement, parallèles entre elles, et parmi lesquelles on distingue deux parois latérales 8, 10 et une paroi intermédiaire 12 disposée entre ces parois latérales 8, 10. On peut distinguer une première paroi latérale 8 et une deuxième paroi latérale 10, la deuxième paroi latérale 10 étant la paroi latérale porteuse de la barrette 6. Sur la figure 3, on a illustré le dispositif vu de côté, rendant particulièrement visible la première paroi latérale 8, qui présente sur sa face externe 14, tournée à l'opposé du compartiment de chauffe 2, une nervure longitudinale de rigidification 16, qui s'étend sur toute la longueur de la paroi et qui est raccordée à l'interface de connexion 4. On reviendra plus après sur cette figure 3 pour décrire plus en détail les moyens portés par des parois latérales aptes à coopérer avec l'élément de verrouillage.

Tel que cela est visible sur les figures 1 et 2, l'interface de connexion correspondante forme, à une extrémité longitudinale proximale 18 de ces parois, une face pleine, tandis qu'à l'extrémité longitudinale distale 20 opposée, la face présente une forme ouverte définie par un boîtier formé par deux montants verticaux 22 qui s'étendent sur toute la hauteur du compartiment de chauffe 2, d'une paroi latérale à l'autre, une barre supérieure 24 s'étendant à l'extrémité longitudinale distale de la deuxième paroi latérale et une barre inférieure 26 s'étendant à l'extrémité longitudinale distale de la première paroi latérale. La barre supérieure du boîtier porte des moyens de fixation (ici non visibles) de la barrette 6.

On comprend que la face pleine formée par l'interface 4 est une face de butée pour la mise en place des modules chauffants dans le compartiment de chauffe 2, ces modules chauffants étant insérés par la face ouverte à l'extrémité longitudinale opposée.

La barrette 6 est avantageusement rainurée. Notamment, la barrette 6 peut présenter une série de rainures verticales 28, régulièrement espacées les unes des autres depuis une extrémité longitudinale de la barrette 6 à l'autre, et perpendiculaires à la deuxième paroi latérale. La barrette 6 s'étend longitudinalement depuis l'interface de connexion 4, en prolongement vertical de la deuxième paroi latérale 10, et sensiblement au centre de celle-ci. La barrette 6 présente une faible épaisseur par rapport à la dimension transversale de la paroi latérale. On comprend que la barrette 6 joue ici un double rôle de dissipation de chaleur et de tenue mécanique de l'ensemble du corps de chauffe. La barrette 6 est rapportée à cet effet sur la deuxième paroi latérale et sur l'interface de connexion, et on comprendra que la barrette 6 peut être réalisée de façon indépendante puis soudée ou collée par exemple sur ces éléments du corps de chauffe, ou bien qu'elle peut être venue de matière avec l'un ou l'autre parmi l'interface de connexion et le compartiment de chauffe 2.

L'interface de connexion présente une double fonction, à savoir une fonction de connexion électrique pour permettre le raccordement des modules chauffants à une source d'énergie électrique embarquée sur le véhicule et une fonction mécanique pour fermer de façon étanche l'ouverture du conduit par laquelle le dispositif de chauffage est inséré.

L'interface de connexion 4 comporte une platine 30 sensiblement plane, et un fourreau 32 qui s'étend longitudinalement en saillie de la platine 30. La platine 30 s'étend perpendiculairement aux parois longitudinales du compartiment de chauffe 2 qu'elle supporte, les parois longitudinales prolongeant une face interne 34 de la platine 30 tandis que le fourreau s'étend depuis la face externe de la platine 30, à l'opposé du compartiment de chauffe 2.

Les moyens de fixation mécanique associés à la première interface de connexion sont portés par la platine 30 qui présente à ses extrémités verticales des pattes de fixation 36 dans lesquelles des trous de fixation permettent la coopération de moyens de vissage avec des moyens taraudés solidaires du conduit ici non représentés, pour la fixation mécanique du dispositif de chauffage additionnel par rapport au conduit. Par ailleurs, la platine 30 comporte sur sa face interne 34, tournée vers le compartiment de chauffe 2, une rainure périphérique 38 dans laquelle un joint peut être positionné de sorte à assurer l'étanchéité à l'air entre l'intérieur de l'installation de climatisation où s'étend le compartiment de chauffe 2 du dispositif et l'extérieur de l'installation où s'étend la platine 30 et notamment le fourreau 32.

La première interface présente des fentes (non visibles sur les figures) qui s'étendent de la face interne de la platine 30 à la face externe portant le fourreau 32. Les fentes débouchent sur la face externe à l'intérieur du fourreau 32, dont les dimensions sont aptes à permettre la réception dans ce fourreau 32 de moyens de raccordement électrique directement reliés au réseau du véhicule. Ces moyens de raccordement coopèrent avec des terminaux de raccordement électriques 40 rendus solidaires d'extrémités libres d'électrodes en saillie des modules chauffants (et non visibles sur les figures) pour les prolonger et permettre le passage de l'ensemble à travers les fentes pour accéder aux moyens de raccordement électrique du véhicule. Ces fentes s'étendent longitudinalement et elles présentent une section définie pour recevoir et guider à travers l'interface les électrodes et/ou les terminaux de raccordement, afin qu'ils puissent s'étendre dans le fourreau 32 en saillie de la face externe de la platine 30.

Sur les figures 1, 2 et 5, seuls les terminaux électriques sont rendus visibles, sans l'extrémité libre de chacune des électrodes prolongeant les modules chauffants, pour faciliter la représentation des moyens de verrouillage spécifiques selon l'invention associés à ces terminaux.

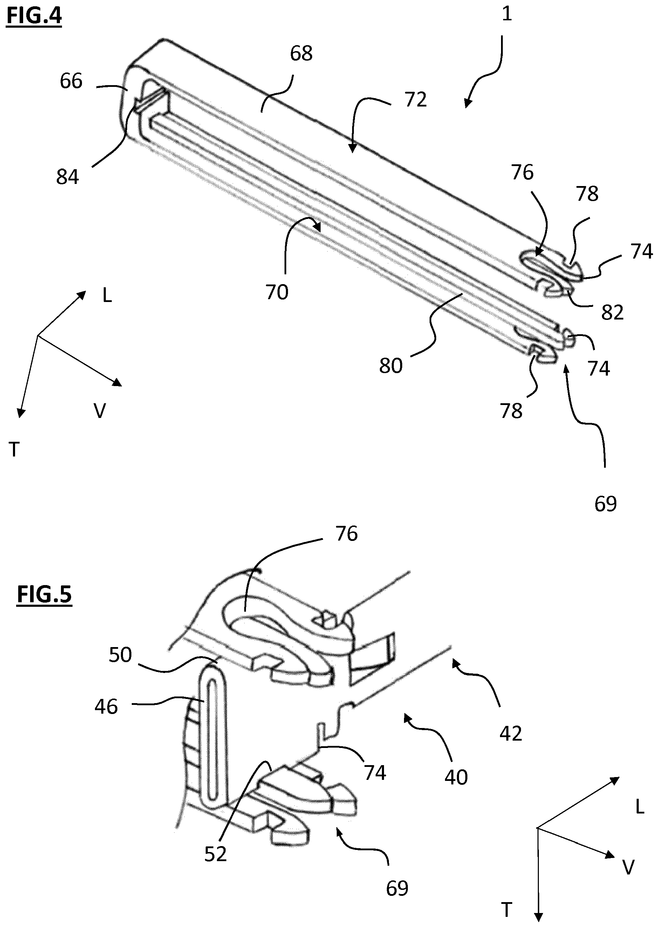

Le terminal de raccordement électrique 40 présente une partie de fixation 42 formant un manchon de largeur légèrement supérieure à la largeur de l'électrode pour venir être serti ou soudé sur l'électrode associée, et il présente une partie de raccordement 44 formée par une languette (visible sur la figure 4) apte à être insérée dans les unes des fentes de l'interface de connexion et qui s'étend dans le prolongement de l'extrémité libre de l'électrode. Cette languette présente ici une section sensiblement rectangulaire, de forme complémentaire de celle des fentes d'insertion réalisées dans l'interface. On comprend que sur les figures 1 et 2, cette languette n'est pas visible du fait de son insertion dans la fente correspondante réalisée dans l'interface de connexion.

Le terminal de raccordement électrique 40 porte des moyens coopérants avec l'élément de verrouillage selon l'invention. Le manchon 42 comporte une première face d'extrémité longitudinale 46, libre, et une deuxième face d'extrémité longitudinale 48 prolongée par la partie de raccordement, et il comporte des arêtes 50 qui s'étendent longitudinalement d'une face à l'autre. Les moyens coopérants avec l'élément de verrouillage consistent, tel que cela est visible sur les figures 1 et 5, en des encoches 52 réalisées transversalement sur les arêtes longitudinales des terminaux de raccordement, de manière à former un guidage transversal pour l'insertion de l'élément de verrouillage selon une direction perpendiculaire aux terminaux et aux modules chauffants associés. On comprendra que ce guidage transversal peut être réalisé par des ouvertures réalisées par des trous débouchants dans l'épaisseur du terminal, si la forme de l'élément de verrouillage le nécessite. Lorsque les terminaux de raccordement 40 sont disposés successivement dans une série transversale, l'alignement des encoches 52 réalisées sur ces terminaux forme un chemin de guidage transversal.

Sur la figure 1, on voit que la paroi intermédiaire 12 présente un dégagement 54 par enlèvement de matière, au voisinage de son extrémité proximale raccordée à l'interface de connexion, de manière à ne pas former obstacle au chemin de guidage transversal défini par la série d'encoches et terminaux. Tel que cela est notamment visible sur la figure 1, ce dégagement génère un épaulement formant une butée longitudinale.

Sur la figure 3, on a illustré la première paroi latérale 8 qui comporte deux lumières 56 disposées de façon symétrique par rapport à la nervure de rigidification 16, chacune de ces lumières formant un passage transversal dans l'épaisseur de la paroi. Chaque lumière 56 comporte une portion principale 58 et une portion secondaire 60 qui prolonge ladite portion principale. La portion principale présente une section, dans le plan vertical et longitudinal de la figure 3, sensiblement rectangulaire, et la portion secondaire s'étend vers le centre de la paroi sur une dimension longitudinale moindre. La portion principale est délimitée longitudinalement par deux bords latéraux 62, et elle est délimitée transversalement par une paroi de recouvrement 64. La deuxième paroi latérale 10 comporte, de façon similaire à la première paroi latérale, deux lumières 56 pour coopérer également avec une partie de l'élément de verrouillage.

Dans le mode de réalisation illustré, les terminaux de raccordement 40 sont portés par les extrémités libres des électrodes et les fentes réalisées dans la première interface débouchent de chaque côté de la platine pour que les terminaux puissent traverser l'interface de connexion et être en prise avec les moyens de raccordement électriques reliés au réseau électrique du véhicule. On comprend que l'on peut prévoir que les extrémités libres des électrodes soient directement insérées dans les fentes de l'interface sans qu'un terminal soit interposé. Des lors, ce sont les des électrodes qui portent les moyens coopérants avec l'élément de verrouillage, que ces éléments soient des encoches ou des ouvertures.

Les figures 4 et 5 montrent plus en détail l'élément de verrouillage selon l'invention.

L'élément de verrouillage 1 consiste avantageusement en une clé prenant la forme d'un U, avec une base 66 et des ailettes 68 qui prolongent perpendiculairement les extrémités de la base, et qui s'étendent parallèlement en regard l'une de l'autre. Chaque ailette présente ainsi une face interne 70 tournée vers l'autre ailette et une face externe 72 tournée à l'opposé.

Chaque ailette 68 présente, à son extrémité libre 69, deux doigts 74 déformables élastiquement et écartés l'un de l'autre par un dégagement central 76, et qui prolongent respectivement un bord de l'ailette. Les doigts sont aptes à se déformer en rapprochement ou en éloignement l'un de l'autre. Chacun de ces doigts porte une entaille 78 sur la face externe, c'est-à-dire la face tournée à l'opposé de l'autre patte, et l'extrémité libre des doigts est biseautée pour former une extrémité pointue.

Chaque ailette 68 porte, sur sa face interne 70, un rail 80 qui s'étend sur toute la longueur de l'ailette et qui dépasse en saillie de la face interne, dans le sens du rapprochement de l'autre ailette et du rail associé. On pourra toutefois noter qu'on pourrait prévoir un élément de verrouillage dont seule une des ailettes porte un tel rail. L'extrémité libre du rail est biseautée pour former une pointe 82. Cette extrémité s'étend au droit du dégagement central 76 formé entre les doigts déformables. Tel que cela sera décrit ci-après, le rail 80 forme un élément en saillie de l'ailette apte à coopérer avec les encoches 52 réalisées sur les terminaux de raccordement 40.

Sur la figure 4, on peut voir qu'une rainure 84 est réalisée dans la face interne de la base 66 de l'élément de verrouillage, de largeur et de profondeur complémentaires de la largeur et de la hauteur de la nervure de rigidification 16 présente sur la face externe de la première paroi latérale 8 du compartiment de chauffe.

On va maintenant décrire la coopération du corps de chauffe et de l'élément de verrouillage 1 associé selon l'invention. Dans le mode de réalisation illustré, où les terminaux de raccordement 40 sont rendus solidaires des électrodes des modules chauffants, on réalise dans un premier temps le sertissage des terminaux sur les électrodes. On insère ensuite les modules chauffants dans les logements appropriés à l'intérieur du compartiment de chauffe, en faisant glisser les modules chauffants en translation vers l'interface de connexion. En fin d'insertion, la languette 44 de chaque terminal 40 pénètre dans la fente qui lui est associée de manière à ressortir de l'autre côté de l'interface de connexion, à l'intérieur du fourreau. On amène alors l'élément de verrouillage 1 à proximité du corps de chauffe, et on se retrouve dans la position illustrée sur la figure 1. Avantageusement, on peut prévoir une position de pré-assemblage, dans laquelle l'élément de verrouillage 1 est retenu par la première paroi latérale 8, par coopération des entailles 78 des doigts déformables 74 avec les bords latéraux 62 de la lumière 56 correspondante.

On réalise le montage de l'élément de verrouillage 1 par translation selon une direction perpendiculaire aux modules chauffants, jusqu'à ce que cet élément de verrouillage prenne la position de verrouillage illustré sur la figure 2.

Pour ce faire, on insère les ailettes 68 dans les lumières 56 correspondantes de la première paroi latérale 8, en les faisant passer sous la paroi de recouvrement 64. Les ailettes, et en premier lieu les doigts déformables 74, passent dans la portion principale 58 des lumières tandis que les rails 80 passent dans la portion secondaire 60.

L'élément de verrouillage 1 est poussé en direction de la deuxième paroi latérale 10, et lors de cette translation, le rail 80 passe successivement dans chacune des encoches 52 réalisées sur les terminaux 40, l'insertion du rail dans les encoches étant facilitée par la forme biseautée de la pointe. Ceci permet d'assurer le passage du rail dans les encoches même en présence d'un décalage longitudinal d'une de ces encoches du à un enfoncement insuffisant du module chauffant.

Sensiblement à mi-chemin, les ailettes 68 passent dans le dégagement 54 formé dans la paroi intermédiaire 12, et l'épaulement assure un réajustement de l'alignement axial de l'élément de verrouillage qui peut être incorrect si plusieurs terminaux sont mal disposés et qu'il en résulte un mauvais alignement initial des encoches.

Après que le rail 80 de chaque ailette 68 ait dépassé le dernier terminal 40 de la série transversale, l'extrémité libre 69 des ailettes est au voisinage de la deuxième paroi latérale 10. La forme pointue des extrémités des doigts déformables 74 et du rail 80 facilite la pénétration des ailettes 68 dans la lumière correspondante. Les doigts 74 se déforment au passage dans la lumière 56 du fait du contact avec les bords latéraux 62 délimitant la portion principale 58 de la lumière, jusqu'à leur relâchement lorsque les entailles 78 viennent en prise autour de ces bords latéraux 62.

On constate, et cela est visible sur la figure 2, que dans cette position de verrouillage, l'élément de verrouillage 1 est agencé de sorte que la base 66 est plaquée contre la première paroi latérale 8 tandis que les extrémités des ailettes 68 sont en prise dans des logements respectifs formés dans la paroi latérale opposée 10.

On a ainsi un blocage de l'élément de verrouillage 1 par rapport au compartiment de chauffe, dans une position transversale sûre, et un alignement des terminaux par rapport à cet élément de verrouillage. Lorsque l'élément de verrouillage est inséré en travers du corps de chauffe, et que l'opérateur s'est assuré ainsi que les terminaux de raccordement sont correctement mis en place, le corps de chauffe du dispositif peut être inséré dans un conduit de l'installation de chauffage-ventilation et/ou climatisation, et les terminaux sont ensuite raccordés au réseau électrique source du véhicule.

La description qui précède explique clairement comment l'invention permet d'atteindre les objectifs qu'elle s'est fixés et notamment de proposer un dispositif de chauffage de type électrique apte à être disposé en travers d'un conduit d'une installation de ventilation, chauffage et/ou climatisation d'un véhicule automobile, pour permettre la diffusion de chaleur par excitation électrique de modules chauffants portés par un corps de chauffe, et pour lequel on s'est assuré du bon positionnement et donc de la bonne connexion électrique des modules chauffants, afin d'optimiser la production de chaleur pour un dispositif donné.

## Revendications

1. Elément de verrouillage de la position d'au moins un module chauffant dans un boîtier (2, 4) d'un dispositif de chauffage électrique, **caractérisé en ce qu'**il présente une forme de U comportant une base (66) et des ailettes (68) qui prolongent perpendiculairement les extrémités de ladite base, chaque ailette présentant une extrémité libre (69) apte à coopérer avec une paroi du boîtier pour figer la position dudit élément de verrouillage (1) par rapport au boîtier et au moins une ailette portant, sur une face interne (70) orientée vers l'ailette opposée, un premier élément d'indexage (80) de la position du au moins un module chauffant, **caractérisé en ce que** l'extrémité libre (69) de chaque ailette (68) porte des doigts à déformation élastique (74).

2. Elément de verrouillage selon la revendication 1, **caractérisé en ce que** le premier élément d'indexage est formé par au moins un rail (80) qui s'étend, sur une face interne (70) de l'ailette (68), sur toute la longueur de ladite ailette.

3. Elément de verrouillage selon l'une des revendications précédentes, **caractérisé en ce que** la face interne de la base (66) comporte une rainure (84).

4. Dispositif de chauffage de type électrique destiné à réchauffer un flux d'air traversant notamment une installation de ventilation, chauffage et/ou climatisation d'un véhicule automobile, comportant un boîtier (2, 4) et au moins un module chauffant par diffusion de chaleur sous l'effet d'un potentiel électrique, le module chauffant comportant au moins une électrode dont une extrémité libre dépasse en saillie de le module chauffant pour être en prise avec des moyens de raccordement électriques du véhicule, **caractérisé en ce qu'**il comporte un élément de verrouillage (1), selon l'une des revendications 1 à 3, de la position des modules chauffants par rapport au boîtier (2, 4), ledit élément de verrouillage (1) étant rapporté sur le boîtier en travers des modules chauffants pour prendre une position de verrouillage dans laquelle il est maintenu en position par fixation sur le boîtier (2, 4) et dans laquelle le premier élément d'indexage (80) qu'il porte est apte à coopérer avec un deuxième élément d'indexage (52) réalisé dans et/ou sur chacune des électrodes.

5. Dispositif de chauffage selon la revendication 4, **caractérisé en ce que** la languette porte un terminal de raccordement (40) serti, ledit deuxième élément d'indexage étant réalisé sur ledit terminal de raccordement.

6. Dispositif de chauffage selon l'une des revendications 4 ou 5, **caractérisé en ce que** le deuxième élément d'indexage est un élément femelle formé par une encoche (52) apte à recevoir ledit premier élément d'indexage (80) formé par un élément en saillie de l'élément de verrouillage.

7. Dispositif de chauffage selon l'une des revendications 4 à 6, **caractérisé en ce que** l'extrémité libre de chaque ailette (68) porte des doigts déformables (74) à rappel élastique aptes à coopérer avec des lumières (56) réalisées dans des parois (8, 10) du boîtier pour bloquer la position de l'élément de verrouillage par rapport au boîtier.

8. Dispositif de chauffage selon l'une des revendications 4 à 7, **caractérisé en ce qu'**un compartiment de chauffe (2) du boîtier présente une forme de parallélépipède avec des faces principales ajourées pour permettre la diffusion de chaleur des modules chauffants et deux parois latérales, l'élément de verrouillage (1) étant agencé pour que dans sa position de verrouillage, la base (66) soit plaquée contre une première paroi latérale (8) tandis que les extrémités des ailettes (68) sont en prise dans des logements (56) respectifs formés dans la paroi latérale opposée (10).

9. Dispositif de chauffage selon la revendication8, **caractérisé en ce que** la première paroi latérale (8) comporte, sur une face externe, une nervure longitudinale (16) qui s'étend au moins sur une longueur sensiblement égale à la hauteur de l'élément de verrouillage (1), ladite nervure (16) étant apte à coopérer avec une rainure (84) réalisée sur la face interne de la base (66) de l'élément de verrouillage (1).

10. Dispositif de chauffage selon l'une des revendications 8 ou 9, **caractérisé en ce qu'**il comporte une barrette (6) disposée contre la deuxième paroi latérale (10) du compartiment de chauffe (2) opposée à la première paroi latérale (8) contre laquelle est plaquée la base (66) de l'élément de verrouillage (1) dans ladite position de verrouillage.

11. Dispositif de chauffage selon l'une des revendications 8 à 10, **caractérisé en ce que** le compartiment de chauffe (2) comporte une paroi intermédiaire (12) parallèle aux parois latérales (8, 10) et disposée entre celles-ci, ladite paroi intermédiaire présentant un dégagement (54) apte à laisser passage à l'élément de verrouillage (1) et à former une butée d'alignement axial dudit élément de verrouillage.

12. Dispositif de chauffage selon l'une des revendications 4 à 11, **caractérisé en ce que** le boîtier comporte une interface de connexion (4) disposée à une extrémité du compartiment de chauffe (2) et qui présente au moins une ouverture traversante, apte à laisser passage à une languette en saillie d'une électrode d'un module chauffant, ou à un terminal électrique (40) monté sur la languette, pour le raccordement des modules chauffants auxdits moyens de raccordement électriques du véhicule.

13. Dispositif de chauffage selon la revendication précédente, **caractérisé en ce que** l'élément de verrouillage (1) s'étend dans la position de verrouillage transversalement entre les modules chauffants et l'interface de connexion (4).

14. Dispositif de chauffage selon la revendication 4, **caractérisé en ce que** le deuxième élément d'indexage est un élément femelle formé par une ouverture réalisée dans l'épaisseur apte à être traversé par l'élément de verrouillage.

15. Dispositif de chauffage selon la revendication4, **caractérisé en ce que** le deuxième élément d'indexage est un élément mâle apte à coopérer avec un premier élément d'indexage femelle porté par l'élément de verrouillage.

16. Installation de ventilation, chauffage et/ou climatisation d'un véhicule automobile comportant un dispositif de chauffage selon l'une des revendications 4 à 15.

## Patentansprüche

1. Element zum Verriegeln der Position von mindestens einem Heizmodul in einem Gehäuse (2, 4) einer elektrischen Heizvorrichtung, **dadurch gekennzeichnet, dass** es eine U-Form aufweist, die eine Basis (66) und Rippen (68) aufweist, die die Enden der Basis senkrecht verlängern, wobei jede Rippe ein freies Ende (69) aufweist, das geeignet ist, mit einer Wand des Gehäuses zusammenzuwirken, um die Position des Verriegelungselements (1) in Bezug auf das Gehäuse und auf mindestens eine Rippe zu fixieren, die auf einer Innenfläche (70), die zur gegenüberliegenden Rippe ausgerichtet ist, ein erstes Indexierelement (80) für die Position des mindestens einen Heizmoduls trägt, **dadurch gekennzeichnet, dass** das freie Ende (69) jeder Rippe (68) Finger mit elastischer Verformung (74) trägt.

2. Verriegelungselement nach Anspruch 1, **dadurch gekennzeichnet, dass** das erste Indexierelement durch mindestens eine Schiene (80) gebildet wird, die sich auf einer Innenfläche (70) der Rippe (68) über die gesamte Länge der Rippe erstreckt.

3. Verriegelungselement nach einem der vorausgehenden Ansprüche, **dadurch gekennzeichnet, dass** die Innenfläche der Basis (66) eine Nut (84) aufweist.

4. Elektrische Heizvorrichtung zur Erwärmung eines Luftstroms, der insbesondere durch eine Belüftungs-, Heizungs- und/oder Klimaanlage eines Kraftfahrzeugs strömt, die aus einem Gehäuse (2, 4) und mindestens einem Heizmodul besteht, das unter Einwirkung eines elektrischen Potentials Wärme abgibt, wobei das Heizmodul mindestens eine Elektrode aufweist, von der ein freies Ende aus dem Heizmodul herausragt, um mit Mitteln zur elektrischen Verbindung des Fahrzeugs in Eingriff zu kommen, **dadurch gekennzeichnet, dass** es ein Verriegelungselement (1) nach einem der Ansprüche 1 bis 3 für die Position der Heizmodule in Bezug zum Gehäuse (2, 4) aufweist, wobei das Verriegelungselement (1) auf dem Gehäuse quer zu den Heizmodulen angebracht ist, um eine Verriegelungsposition einzunehmen, in der es durch Befestigung an dem Gehäuse (2, 4) in Position gehalten wird und in der das erste Indexierelement (80), das es trägt, geeignet ist, mit einem zweiten Indexierelement (52) zusammenzuwirken, das in oder auf jeder der Elektroden ausgeführt ist.

5. Heizvorrichtung nach Anspruch 4, **dadurch gekennzeichnet, dass** die Zunge einen Crimp-Verbindungsanschluss (40) trägt, wobei das zweite Indexierelement auf dem Verbindungsanschluss ausgeführt ist.

6. Heizvorrichtung nach einem der Ansprüche 4 oder 5, **dadurch gekennzeichnet, dass** das zweite Indexierelement ein weibliches Element ist, das durch eine Kerbe (52) gebildet wird, die geeignet ist, das erste Indexierelement (80) aufzunehmen, das durch ein aus dem Verriegelungselement herausragendes Element gebildet wird.

7. Heizvorrichtung nach einem der Ansprüche 4 bis 6, **dadurch gekennzeichnet, dass** das freie Ende jeder Rippe (68) verformbare Finger (74) mit elastischer Rückstellung trägt, die geeignet sind, mit in den Wänden (8, 10) des Gehäuses ausgeführten Öffnungen (56) zusammenzuwirken, um die Position des Verriegelungselements in Bezug zum Gehäuse zu blockieren.

8. Heizvorrichtung nach einem der Ansprüche 4 bis 7, **dadurch gekennzeichnet, dass** ein Heizraum (2) des Gehäuses die Form eines Parallelepipeds mit durchbrochenen Hauptflächen, um die Wärmeabgabe der Heizmodule zu ermöglichen, und zwei Seitenwänden aufweist, wobei das Verriegelungselement (1) so angeordnet ist, dass in seiner Verriegelungsposition die Basis (66) gegen eine erste Seitenwand (8) gedrückt wird, während die Enden der Rippen (68) in Eingriff in den jeweiligen Öffnungen (56) stehen, die in der gegenüberliegenden Seitenwand (10) ausgebildet sind.

9. Heizvorrichtung nach Anspruch 8, **dadurch gekennzeichnet, dass** die erste Seitenwand (8) an einer Außenseite eine Längssicke (16) aufweist, die sich mindestens über eine Länge erstreckt, die im Wesentlichen gleich der Höhe des Verriegelungselements (1) ist, wobei die Sicke (16) geeignet ist, mit einer Nut (84) zusammenzuwirken, die auf der Innenseite der Basis (66) des Verriegelungselements (1) ausgeführt ist.

10. Heizvorrichtung nach einem der Ansprüche 8 oder 9, **dadurch gekennzeichnet, dass** sie eine Leiste (6) aufweist, die gegen die zweite Seitenwand (10) des Heizraums (2) gegenüber der ersten Seitenwand (8) angeordnet ist, gegen die die Basis (66) des Verriegelungselements (1) in der Verriegelungsposition gedrückt wird.

11. Heizvorrichtung nach einem der Ansprüche 8 bis 10, **dadurch gekennzeichnet, dass** der Heizraum (2) eine Zwischenwand (12) parallel zu den Seitenwänden (8, 10) und zwischen diesen angeordnet aufweist, wobei die Zwischenwand einen Freiraum (54) aufweist, der geeignet ist, den Durchgang zum Verriegelungselement (1) zu ermöglichen und einen Anschlag für die axiale Ausrichtung des Verriegelungselements zu bilden.

12. Heizvorrichtung nach einem der Ansprüche 4 bis 11, **dadurch gekennzeichnet, dass** das Gehäuse eine Verbindungsschnittstelle (4) aufweist, die an einem Ende des Heizraums (2) angeordnet ist und mindestens eine durchgehende Öffnung aufweist, die geeignet ist, den Durchgang zu einer herausragenden Zunge einer Elektrode eines Heizmoduls oder zu einem auf der Zunge angebrachten elektrischen Anschluss (40) für die Verbindung der Heizmodule mit den Mitteln zur elektrischen Verbindung des Fahrzeugs zu ermöglichen.

13. Heizvorrichtung nach dem vorausgehenden Anspruch, **dadurch gekennzeichnet, dass** sich das Verriegelungselement (1) in der Verriegelungsposition quer zwischen den Heizmodulen und der Verbindungsschnittstelle (4) erstreckt.

14. Heizvorrichtung nach Anspruch 4, **dadurch gekennzeichnet, dass** das zweite Indexierelement ein weibliches Element ist, das durch eine Öffnung gebildet wird, die in der Dicke ausgeführt ist und geeignet ist, von dem Verriegelungselement durchquert zu werden.

15. Heizvorrichtung nach Anspruch 4, **dadurch gekennzeichnet, dass** das zweite Indexierelement ein männliches Element ist, das geeignet ist, mit einem ersten weiblichen Indexierelement zusammenzuwirken, das von dem Verriegelungselement getragen wird.

16. Installation zur Belüftung, Heizung und/oder Klimatisierung eines Kraftfahrzeugs, die eine Heizvorrichtung nach einem der Ansprüche 4 bis 15 aufweist.

## Claims

1. Element for locking the position of at least one heating module in a housing (2, 4) of an electrical heating device, **characterized in that** it is in the shape of a U comprising a base (66) and fins (68) which extend from and perpendicular to the ends of said base, each fin having a free end (69) that is able to cooperate with a wall of the housing in order to fix the position of said locking element (1) with respect to the housing and at least one fin bearing, on an internal face (70) oriented towards the opposite fin, a first indexing element (80) for indexing the position of the at least one heating module, **characterized in that** the free end (69) of each fin (68) bears elastic deformation fingers (74).

2. Locking element according to Claim 1, **characterized in that** the first indexing element consists of at least one rail (80) which extends, on an internal face (70) of the fin (68), over the entire length of said fin.

3. Locking element according to either of the preceding claims, **characterized in that** the internal face of the base (66) comprises a groove (84).

4. Heating device of the electrical type intended for heating a flow of air passing through in particular a ventilation, heating and/or air-conditioning installation of a motor vehicle, comprising a housing (2, 4) and at least one heating module that heats by diffusion of heat under the effect of an electrical potential, the heating module comprising at least one electrode of which a free end projects from the heating module so as to engage with electrical connection means of the vehicle, **characterized in that** it comprises a locking element (1), according to one of Claims 1 to 3, for locking the position of the heating modules with respect to the housing (2, 4), said locking element (1) being attached to the housing across the heating modules so as to adopt a locking position in which it is held in position by securing to the housing (2, 4), and in which the first indexing element (80) which it bears is able to cooperate with a second indexing element (52) created in and/or on each one of the electrodes.

5. Heating device according to Claim 4, **characterized in that** the tab bears a crimped connection terminal (40), said second indexing element being created on said connection terminal.

6. Heating device according to either of Claims 4 and 5, **characterized in that** the second indexing element is a female element consisting of a notch (52) that is able to receive said first indexing element (80) which consists of an element projecting from the locking element.

7. Heating device according to one of Claims 4 to 6, **characterized in that** the free end of each fin (68) bears deformable fingers (74) that return elastically and are able to cooperate with openings (56) created in walls (8, 10) of the housing in order to fix the position of the locking element with respect to the housing.

8. Heating device according to one of Claims 4 to 7, **characterized in that** a heating compartment (2) of the housing wall is parallelepipedal in shape with openworked main faces in order to allow the diffusion of heat from the heating modules and two lateral walls, the locking element (1) being arranged such that, in its locking position, the base (66) is pressed against a first lateral wall (8) while the ends of the fins (68) are engaged in respective recesses (56) formed in the opposite lateral wall (10) .

9. Heating device according to Claim 8, **characterized in that** the first lateral wall (8) comprises, on an external face, a longitudinal rib (16) that extends at least over a length essentially equal to the height of the locking element (1), said rib (16) being able to cooperate with a groove (84) created on the internal face of the base (66) of the locking element (1).

10. Heating device according to either of Claims 8 and 9, **characterized in that** it comprises a bar (6) arranged against the second lateral wall (10) of the heating compartment (2) opposite the first lateral wall (8), against which the base (66) of the locking element (1) is pressed in said locking position.

11. Heating device according to one of Claims 8 to 10, **characterized in that** the heating compartment (2) comprises an intermediate wall (12) that is parallel to the lateral walls (8, 10) and is arranged between these, said intermediate wall having a setback (54) that is suitable for allowing the locking element (1) to pass through and for forming a stop for the axial alignment of said locking element.

12. Heating device according to one of Claims 4 to 11, **characterized in that** the housing comprises a connection interface (4) which is arranged at one end of the heating compartment (2) and which has at least one through-opening which is suitable for allowing a projecting tab of an electrode of a heating module, or an electrical terminal (40) mounted on the tab, to pass through, for the purpose of connecting the heating modules to said electrical connection means of the vehicle.

13. Heating device according to the preceding claim, **characterized in that** the locking element (1) extends, in the locking position, transversely between the heating modules and the connection interface (4).

14. Heating device according to Claim 4, **characterized in that** the second indexing element is a female element formed by an opening created in the thickness, through which the locking element can pass.

15. Heating device according to Claim 4, **characterized in that** the second indexing element is a male element that is able to cooperate with a first female indexing element borne by the locking element.

16. Ventilation, heating and/or air-conditioning installation of a motor vehicle, comprising a heating device according to one of Claims 4 to 15.
